# EUROPEAN PATENT APPLICATION

(11) **EP 4 715 917 A1**
(43) Date of publication of application: **25.03.2026**
(21) Application number: 25196239.5
(22) Date of filing: 15.08.2025
(51) Int. Cl.: H01M 10/04, H01M 50/474, H01M 50/477, H01M 50/483, H01M 50/486

(54) **SECONDARY BATTERY AND METHOD OF MANUFACTURING THE SAME**

(30) Priority: 23.09.2024 KR 20240128218
(71) Applicant: SAMSUNG SDI CO., LTD., Yongin-si, Gyeonggi-do 17084 (KR)
(72) Inventor: HWANG, Gibeom, Yongin-si, Gyeonggi-do 17084 (KR)
(74) Representative: Marks & Clerk LLP

(57) **Abstract**

A secondary battery includes an electrode assembly including a first electrode, a second electrode, and a separator between the first electrode and the second electrode, a spacer in contact with at least a portion of an outer surface of the electrode assembly, a case including a top opening and accommodating the electrode assembly and the spacer, and a cap assembly at the top opening to seal the electrode assembly.

## Description

### BACKGROUND

### 1. Field

Aspects of embodiments of the present disclosure relate to a secondary battery and a method for manufacturing the secondary battery.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

A secondary battery according to an embodiment of the present disclosure includes an electrode assembly including a first electrode, a second electrode, and a separator (disposed) between the first electrode and the second electrode; a spacer (disposed) in contact with at least a portion of an outer surface of the electrode assembly; a case including a top opening and accommodating the electrode assembly and the spacer; and a cap assembly (disposed) at the top opening to seal the electrode assembly.

According to an embodiment, the spacer may include a first spacer and a second spacer, each (of the first spacer and the second spacer) covering at least one of lower edges of the electrode assembly. Further, the first spacer and the second spacer may (be disposed to) face each other with the electrode assembly positioned therebetween.

According to an embodiment, a thickness of the spacer may be in a range of 0.5 mm to 3 mm.

According to an embodiment, a height of the spacer may be equal to or greater than a height of the electrode assembly.

According to an embodiment, a surface of the spacer in contact with the electrode assembly may be at least one of a flat surface or a curved surface.

According to an embodiment, the spacer may include an engraved pattern on a surface in contact with the electrode assembly.

According to an embodiment, the engraved pattern may include a first engraved pattern aligned parallel to a first direction, and a second engraved pattern aligned parallel to a second direction that intersects with the first direction. Further, the first engraved pattern and the second engraved pattern may intersect at least at one point.

According to an embodiment, a cross-sectional shape of the first engraved pattern may be a triangular shape, a rectangular shape, or a segmental circular shape.

According to an embodiment, the spacer may be spaced apart from the cap assembly.

According to an embodiment, the spacer may include an insulating material or stainless steel (SUS).

According to an embodiment, the insulating material may include at least one of polypropylene (PP) or polyethylene (PE).

According to an embodiment, a material contained in the spacer may have a higher Young's modulus than a material contained in the case.

A method for manufacturing a secondary battery according to an embodiment of the present disclosure includes disposing a first spacer and a second spacer to face each other with an electrode assembly positioned therebetween such that each of the first spacer and the second spacer comes into contact with at least a portion of an outer surface of the electrode assembly and covers at least one of lower edges of the electrode assembly; and inserting the electrode assembly, the first spacer, and the second spacer into a case.

According to an embodiment, the first spacer may include an engraved pattern on a surface in contact with the electrode assembly.

According to an embodiment, the engraved pattern may include multiple first engraved patterns aligned parallel to a first direction, and multiple second engraved patterns aligned parallel to a second direction that intersects with the first direction. Further, the multiple first engraved patterns and the multiple second engraved patterns may intersect at least at one point.

According to an embodiment, the method described above may further include injecting electrolyte into the case after the inserting of the electrode assembly, the first spacer, and the second spacer into the case. Further, at least some of the electrolyte may diffuses within the case through the engraved pattern.

According to an embodiment, the method described above may further include, after the inserting of the electrode assembly, the first spacer, and the second spacer into the case, discharging gas from the case by applying pressure to at least one of a first side surface of the case in contact with the first spacer or a second side surface of the case in contact with the second spacer.

According to an embodiment, the discharging of the gas from the case may further include utilizing a heat vacuum charging (HVC) method to discharge the gas.

According to an embodiment, the first spacer may include at least one of stainless steel (SUS), polypropylene (PP) or polyethylene (PE).

According to an embodiment, a material contained in the first spacer may have a higher Young's modulus than a material contained in the case.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1A illustrates an exploded perspective view of a secondary battery according to an embodiment.
FIG. 1B illustrates an exploded perspective view of a secondary battery according to another embodiment.
FIG. 2 illustrates a cross-sectional view of a secondary battery according to an embodiment.
FIG. 3A illustrates a plan view of a spacer included in a secondary battery according to an embodiment.
FIG. 3B illustrates a plan view of a spacer included in a secondary battery according to another embodiment.
FIG. 4A illustrates a cross-sectional view of a spacer included in a secondary battery according to an embodiment.
FIG. 4B illustrates a cross-sectional view of a spacer included in a secondary battery according to another embodiment.
FIG. 4C illustrates a cross-sectional view of a spacer included in a secondary battery according to still another embodiment.
FIG. 5 illustrates a schematic view of force distribution observed in a spacer when pressure is applied to a secondary battery, according to an embodiment.
FIG. 6 illustrates a flowchart of a method for manufacturing a secondary battery according to an embodiment.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, **B, C,** A and **B,** A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this specification, the Young's Modulus is a physical quantity that represents the stiffness of a material, which indicates the material's resistance to elastic deformation.

For example, the Young's Modulus can be measured through a Tensile Test, where a tensile load is applied to the material to obtain a stress-strain curve, and the slope of the curve in the elastic region is measured to calculate the Young's Modulus.

Alternatively, the Young's Modulus can be measured using Acoustic Emission methods, where the natural frequency of the material is measured using acoustic resonance equipment, and the Young's Modulus is then calculated based on this data.

Additionally, the Young's Modulus can be measured through a Flexural Test, where a bending load is applied to a specimen supported at both ends, and the deformation caused by the load is measured to calculate the Young's Modulus.

Measurement of Young's Modulus may be carried out at Normal Temperature and Pressure - i.e. in air at 20 °C (293.15 K) and 1 atm (101.325 kPa).

The terms used in the present specification are for describing embodiments of the present disclosure and are not intended to limit the present disclosure.

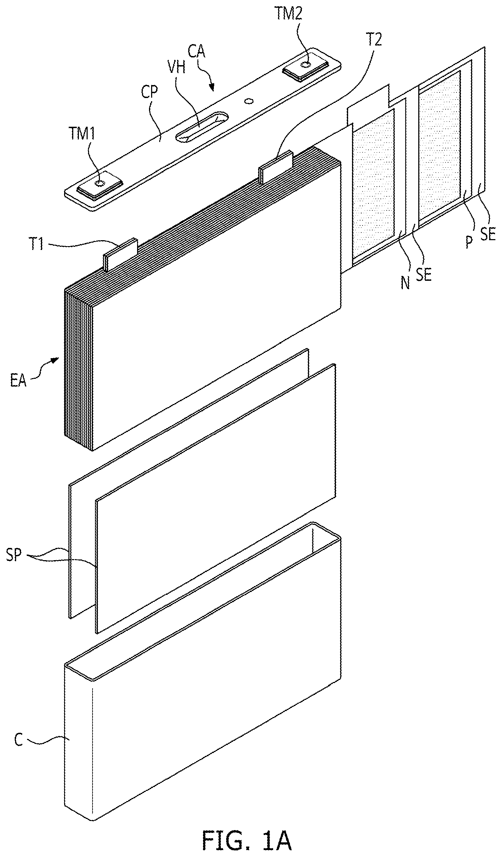

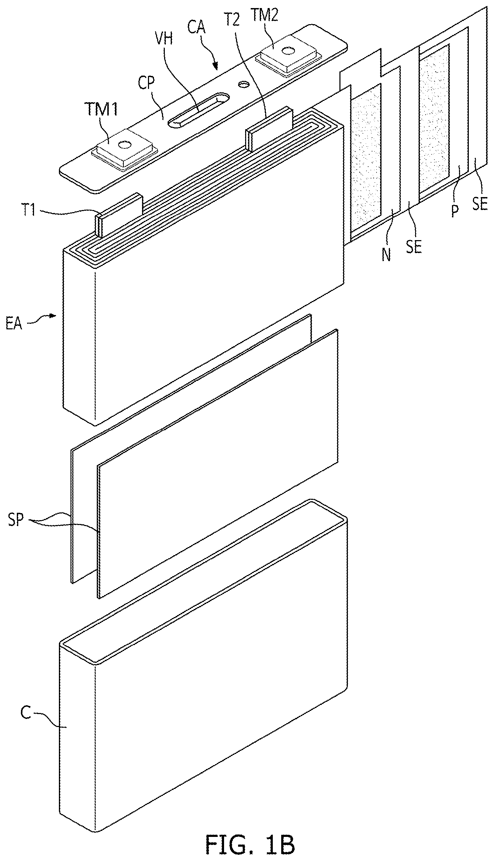

FIG. 1A illustrates an exploded perspective view of a secondary battery according to an embodiment. FIG. 1B illustrates an exploded perspective view of a secondary battery according to another embodiment.

Referring to FIGS. 1A and 1B, a secondary battery may include an electrode assembly EA, a spacer SP, a case C accommodating the electrode assembly EA and the spacer SP, and a cap assembly CA sealing an opening of the case C.

Referring to FIG. 1A, the electrode assembly EA may have a structure in which a first electrode P, a separator SE, and a second electrode N are sequentially stacked. Here, the first electrode P may be a positive electrode, and the second electrode N may be a negative electrode, or vice versa. The separator SE may be disposed between the first electrode P and the second electrode N to electrically insulate the first electrode P from the second electrode N. The electrode assembly EA may further include a first electrode tab T1 and a second electrode tab T2 at one end thereof. The first electrode tab T1 may be electrically connected to the first electrode P, and the second electrode tab T2 may be electrically connected to the second electrode N. The first electrode tab T1 and the second electrode tab T2 may be spaced apart from each other, thereby being electrically insulated.

Referring to FIG. 1B, the electrode assembly EA may be formed by winding the first electrode P, the separator SE, and the second electrode N in a jelly-roll shape. However, the electrode assembly EA may have various shapes, e.g., wound in a cylindrical shape.

The spacer SP may be disposed to be in contact with at least a portion of an outer surface of the electrode assembly EA. The spacer SP may be positioned between the electrode assembly EA and the case C. At least a portion of the outer surface of the electrode assembly EA may be spaced apart from the case C with the spacer SP interposed therebetween.

The case C may be formed to have an opening formed at one side thereof and a hollow space to accommodate the electrode assembly EA therein. The case C may be formed of a conductive metal such as aluminum, an aluminum alloy, or a nickel-plated steel. For example, the case C may be formed of stainless use steel (SUS).

After the electrode assembly EA is accommodated in the case C, the cap assembly CA may be coupled to the opening of the case C, thereby sealing the case C. Additionally, the first electrode P and the second electrode N of the electrode assembly EA may be electrically connected to terminal plates TM1 and TM2 provided in the cap assembly CA, respectively. In this configuration, the electrical connections between the terminal plate TM1 and the first electrode P and between the terminal plate TM2 and the second electrode N may be established through the first electrode tab T1 and the second electrode tab T2, respectively.

In an embodiment, the cap assembly CA may include a vent hole VH, which may serve as a through-hole for releasing an internal pressure from the case C. The vent hole VH may be sealed by a vent plate. In a case where a gas is generated inside the case C, causing the internal pressure to exceed a threshold range, the vent plate may be detached to the outside, thereby opening the vent hole VH. As a result, the gas can be released, reducing the internal pressure of the secondary battery.

The secondary battery shown in FIG. 1A or FIG. 1B may be a lithium-ion secondary battery with a prismatic design. The prismatic secondary battery in each of FIG. 1A and FIG. 1B is merely an illustrative example and may be in the form of a side-terminal design, in which the vent hole and the terminal plates are positioned on different surfaces of the secondary battery. Additionally, while the illustrated example of each of FIG. 1A and FIG. 1B describes the prismatic secondary battery, other types of the secondary battery, e.g., a pouch-type secondary battery or a cylindrical secondary battery, may also be used.

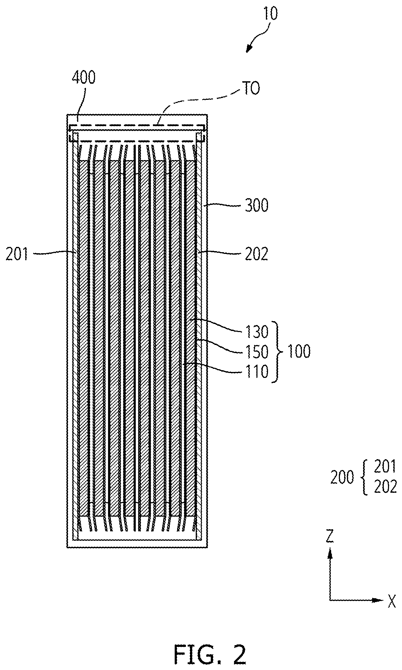

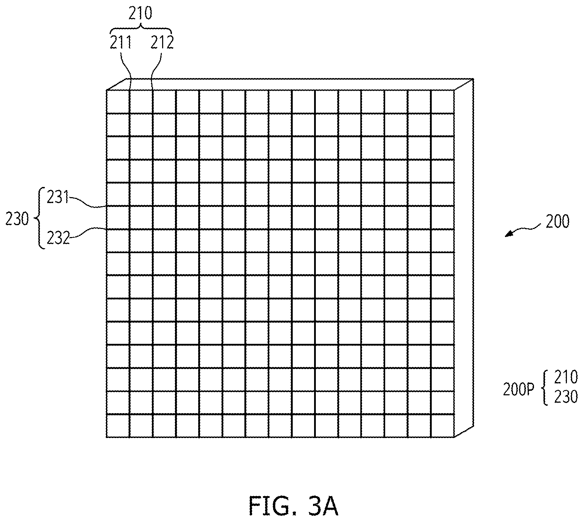

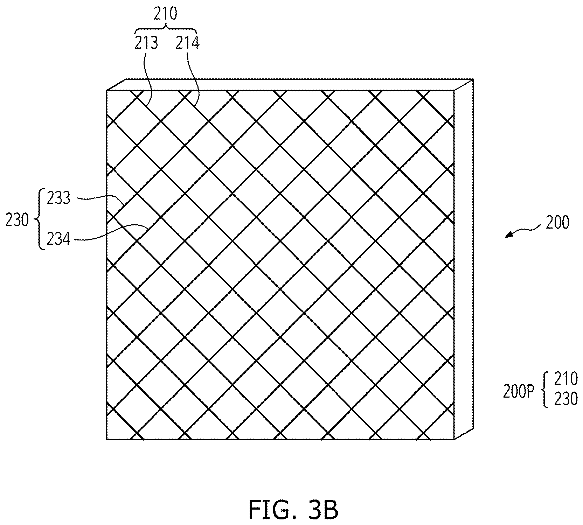

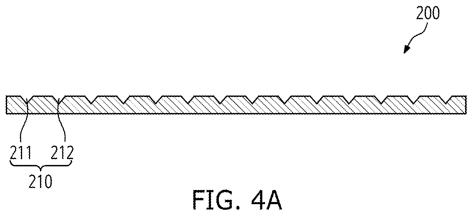

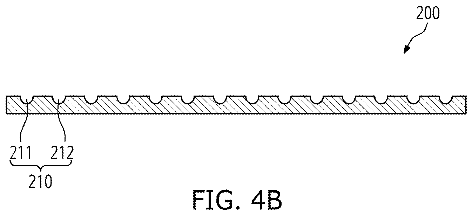

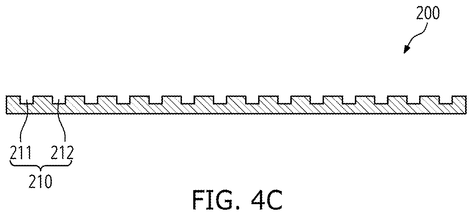

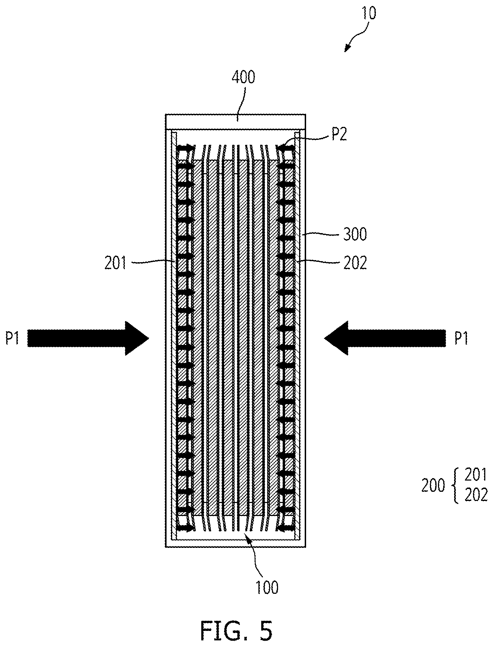

FIG. 2 illustrates a cross-sectional view of a secondary battery according to an embodiment. FIG. 3A illustrates a plan view of a spacer included in a secondary battery according to an embodiment. FIG. 3B illustrates a plan view of a spacer included in a secondary battery according to another embodiment. FIG. 4A illustrates a cross-sectional view of a spacer included in a secondary battery according to an embodiment. FIG. 4B illustrates a cross-sectional view of a spacer included in a secondary battery according to another embodiment. FIG. 4C illustrates a cross-sectional view of a spacer included in a secondary battery according to still another embodiment. FIG. 5 illustrates a schematic view of force distribution observed in a spacer when pressure is applied to a secondary battery, according to an embodiment.

Referring to FIG. 2, a secondary battery 10 may include an electrode assembly 100, which includes a first electrode 110, a second electrode 130, and a separator 150 disposed between the first electrode 110 and the second electrode 130; a spacer 200 disposed to be in contact with at least a portion of an outer surface of the electrode assembly 100; a case 300 having a top opening TO and accommodating the electrode assembly 100 and the spacer 200; and a cap assembly 400 disposed at the top opening TO to seal the electrode assembly 100. In this configuration, the spacer 200 may include a first spacer 201 and a second spacer 202, which are arranged to face each other with the electrode assembly 100 positioned therebetween. The spacer 200 may be positioned in contact with the electrode assembly 100 and disposed between the electrode assembly 100 and the case 300. With the spacer 200 interposed between the electrode assembly 100 and the case 300, at least a portion of the electrode assembly 100 may be spaced apart from the case 300. For example, not only the electrode assembly 100 but also the spacer 200 may be inserted into the case 300. As a result, the impact caused by the electrode assembly 100 colliding with the case 300 during insertion may be reduced. This may minimize or prevent bending of the electrode assembly 100 or misalignment of its components, including the first electrode 110, the second electrode 130, or the separator 150.

Additionally, the electrode assembly 100 of the secondary battery 10 according to an embodiment may further include a first electrode tab and a second electrode tab. The separator 150 may be placed between the first electrode **110** and the second electrode 130, so that the first electrode **110** and the second electrode 130 are spaced apart and electrically insulated from each other. The separator 150 may include an insulating material. The first electrode tab may be disposed to be electrically connected to the first electrode 110, and the second electrode tab may be disposed to be electrically connected to the second electrode 130.

In an embodiment, the electrode assembly 100 may be stacked in layers with the first electrode 110, the second electrode 130, and the separator 150. For example, in the electrode assembly 100, the first electrode 110 and the second electrode 130 may be alternately stacked with the cut separator 150 interposed therebetween. In another example, in the electrode assembly 100, the first electrode 110 and the second electrode 130 may be stacked in a Z-Stacking manner, where the first electrode 110 and the second electrode 130 are alternately inserted between the folded separators 150. In yet another example, the electrode assembly 100 may be formed by winding the first electrode 110, the second electrode 130, and the separator 150 into a jelly-roll shape. However, the electrode assembly 100 may also be wound into a cylindrical shape or the like to form a winding core, and in this case, the winding core may include a through-hole.

In an embodiment, the first electrode 110 may include a substrate and an active material layer disposed on the substrate. A portion of the substrate where no active material layer is disposed may correspond to an uncoated region, while a portion of the substrate where the active material layer is disposed may correspond to a coated (mixture) region. A tab region may be formed in the uncoated region. The tab region of the first electrode 110 may come into contact with the first electrode tab, thereby electrically connecting the tab region of the first electrode 110 to the first electrode tab.

In an embodiment, the second electrode 130 may include a substrate and an active material layer disposed on the substrate. A portion of the substrate where no active material layer is disposed may correspond to an uncoated region, while a portion of the substrate where the active material layer is disposed may correspond to a coated (mixture) region. A tab region may be formed in the uncoated region. The tab region of the second electrode 130 may come into contact with the second electrode tab, thereby electrically connecting the tab region of the second electrode 130 to the second electrode tab.

The first electrode 110 is one of a positive electrode or a negative electrode, and the second electrode 130 is the other of the positive electrode or the negative electrode. The first electrode 110 and the second electrode 130 may have opposite polarities. For instance, in a case where the first electrode 110 is the positive electrode, the second electrode 130 may be the negative electrode. In this case, the active material layer of the first electrode 110 may be a positive active material layer, and the active material layer of the second electrode 130 may be a negative active material layer. For example, the positive active material layer may include a transition metal oxide, and the negative active material layer may include graphite. Further, the substrate of the first electrode 110 may include, e.g., an aluminum (Al) foil, and the substrate of the second electrode 130 may include, e.g., a copper (Cu) or a nickel (Ni) foil. However, the materials of the substrate or active material layer may include various materials appropriate for the respective polarities.

The first electrode 110 and the second electrode 130 may correspond to the first electrode P and the second electrode N shown in FIG. 1A or FIG. 1B, respectively. Similarly, the first electrode tab and the second electrode tab may correspond to the first electrode tab T1 and the second electrode tab T2 shown in FIG. 1A or FIG. 1B, respectively.

The separator 150 may allow the movement of specific ions while electrically insulating the first electrode 110 from the second electrode 130. For example, the separator 150 may serve to prevent a short circuit between the first electrode **110** and the second electrode 130. For example, the separator 150 may include, e.g., a polyethylene film, a polypropylene film, or a polyethylene-polypropylene film.

The secondary battery 10 according to an embodiment may include the spacer 200 disposed in contact with at least a portion of the outer surface of the electrode assembly 100. The spacer 200 may be positioned between the electrode assembly 100 and the case 300, such that at least a portion of the outer surface of the electrode assembly 100 is spaced apart from the case 300.

**In** an embodiment, at least one of lower edges of the electrode assembly 100 may be covered by the spacer 200. The spacer 200 may cover a portion of at least one of the lower edges of the electrode assembly 100 or may cover the entirety of at least one of the lower edges of the electrode assembly 100. **In** this case, the spacer 200 may be disposed to extend downward beyond the outer surface of the electrode assembly 100 by a predetermined length, or the spacer 200 may be disposed to extend downward without exceeding the outer surface of the electrode assembly 100.

**In** one example, a height of the spacer 200 may be greater than a height of the electrode assembly 100. Here, the height of the spacer 200 may refer to a length of the spacer 200 in the Z-direction. **In** another example, the height of the spacer 200 may be substantially the same as the height of the electrode assembly 100. However, the height of the spacer 200 may also be smaller than the height of the electrode assembly 100 so that the spacer 200 is spaced apart from the cap assembly 400.

**In** an embodiment, the spacer 200 may include the first spacer 201 and the second spacer 202. For instance, the first spacer 201 and the second spacer 202 may be arranged to face each other with the electrode assembly 100 positioned therebetween. The first spacer 201 and the second spacer 202 may be arranged such that they are spaced apart from the center of the electrode assembly 100. For example, the first spacer 201 and the second spacer 202 may be positioned symmetrically at equal or similar distances from the center axis of the electrode assembly 100, in opposite directions. **In** this case, the first spacer 201 and the second spacer 202 may be rotationally symmetric about the center axis of the electrode assembly 100. The center axis of the electrode assembly 100 may be substantially parallel to a height direction of the electrode assembly 100. For example, the height direction of the electrode assembly 100 may be parallel to the Z-direction. In another example, the first spacer 201 and the second spacer 202 may be arranged in a plane symmetry with respect to a plane passing through the electrode assembly 100. In this case, the plane passing through the electrode assembly 100 may be a plane perpendicular to the X-direction. For example, opposite ends of the first spacer 201 may be arranged to be spaced apart from opposite ends of the second spacer 202, respectively, or the opposite ends of the first spacer 201 may be arranged to partially contact with the opposite ends of the second spacer 202, respectively. However, the first spacer 201 and the second spacer 202 may be arranged in various ways depending on the shape of the electrode assembly 100 or the shape of the case 300.

In an embodiment, in the case of a prismatic secondary battery, the first spacer 201 may be arranged to contact a first outer surface having a larger area among the outer surfaces of the electrode assembly 100. The second spacer 202 may be arranged to contact a second outer surface that faces the first outer surface and has an area substantially the same or similar to that of the first outer surface, among the outer surfaces of the electrode assembly 100. In this case, the first spacer 201 may contact a lower side of the first outer surface of the electrode assembly 100 and may cover the lower side of the first outer surface. Here, the lower side of the first outer surface may be one of the lower edges of the electrode assembly 100. Furthermore, the second spacer 202 may contact a lower side of the second outer surface of the electrode assembly 100 and may cover the lower side of the second outer surface. Here, the lower side of the second outer surface may be one of the lower edges of the electrode assembly 100. This structure may correspond to an electrode assembly in a stacked configuration or a jelly-roll configuration. In this example, the first spacer 201 and the second spacer 202 are respectively arranged to contact the first outer surface and the second outer surface each having a larger area. In another example, a third outer surface and a fourth outer surface each having a smaller area and facing each other may be respectively arranged to contact the first spacer 201 and the second spacer 202. In this case, the third and fourth outer surfaces in the stacked-type electrode assembly may be flat surfaces, or the third and fourth outer surfaces in the jelly-roll type electrode assembly may be curved surfaces. In various types of electrode assemblies, such as a cylindrical electrode assembly, the first and second spacers 201 and 202 may be arranged to contact a curved surface, and may cover at least a portion of the lower edge of the curved surface.

In an embodiment, a thickness of the spacer 200 may range from about 0.5 nm to about 3 mm, e.g., a total thickness of the first and second spacers 201 and 202 may range from about 0.5 nm to about 3 mm. The thickness of the spacer 200 may be selected in consideration of factors such as an energy density of the secondary battery 10, ease of insertion of the spacer 200 into the case 300, prevention of deformation of the electrode assembly 100, and/or distribution of pressure exerted from the case 300. For example, the thickness of the first spacer 201 and the thickness of the second spacer 202 may be identical. For example, the thickness of the first spacer 201 and the thickness of the second spacer 202 may be different from each other.

In an embodiment, the electrode assembly 100 and the spacer 200 may be arranged in contact with each other. A separate adhesive layer may not be disposed between the electrode assembly 100 and the spacer 200. While the pressure is applied to the first spacer 201 and the second spacer 202 in the direction toward the electrode assembly 100, the electrode assembly 100 and the spacer 200 may be accommodated within the case 300. As the case 300 prevents the electrode assembly 100 and the spacer 200 from dislodging to the outside, the electrode assembly 100 and the spacer 200 accommodated within the case 300 may remain in contact (e.g., direct contact) with each other.

In an embodiment, the surface of the spacer 200 in contact with the electrode assembly 100 may be a flat surface or a curved surface. For example, in a case where the first electrode 110, the second electrode 130, and the separator 150 of the electrode assembly 100 are stacked, the outer surface of the electrode assembly 100 may be a flat surface. In this case, the surface of the spacer 200 that contacts the outer surface of the electrode assembly 100 may also be the flat surface. In another example, in a case where the first electrode 110, the second electrode 130, and the separator 150 of the electrode assembly 100 are wound in a jelly-roll configuration, the outer surface of the electrode assembly 100 may include both a flat portion and a curved portion. In this case, the spacer 200 may contact the flat portion of the outer surface of the electrode assembly 100. In another example, the spacer 200 may contact the curved portion of the outer surface of the electrode assembly 100. In still another example, the spacer 200 may contact both the flat and curved portions of the outer surface of the electrode assembly 100.

In a case where the spacer 200 comes into contact with the flat surface or the flat portion of the electrode assembly 100, the thickness of the spacer 200 may remain constant. In a case where the spacer 200 comes into contact with the curved surface or the curved portion of the electrode assembly 100, the thickness of the spacer 200 may either remain constant or vary. For example, even in a case where the electrode assembly 100 has the curved surface, at least a portion of the curved surface of the electrode assembly 100 may be covered by the spacer 200 with a varying thickness. For example, a portion of the curved surface of the electrode assembly 100 may be covered by the spacer 200, and the outer surface of the spacer 200, which is the flat surface, may be exposed to the outside.

Referring to FIGS. 3A and 3B, the spacer 200 may include an engraved pattern 200P on a surface that contacts the electrode assembly 100. The engraved pattern 200P may include multiple repetitive engraved pattern elements, e.g., linear and continuous lines. The engraved pattern elements may be parallel to one another or intersect with each other. The engraved pattern 200P may include a first engraved pattern 210 and a second engraved pattern 230. The first engraved pattern 210 may be aligned parallel to a first direction, and the second engraved pattern 230 may be aligned parallel to a second direction that intersects with the first direction. For example, the first engraved pattern 210 may include multiple engraved pattern elements 211 and 212, and the second engraved pattern 230 may include multiple engraved pattern elements 231 and 232. The first engraved pattern 210 and the second engraved pattern 230 may intersect at least at one point. For instance, the first engraved pattern 210 and the second engraved pattern 230 may intersect with each other. One of the engraved pattern elements of the first engraved pattern 210 may intersect with at least one of the engraved pattern elements of the second engraved pattern 230.

Referring to FIG. 3A, the first engraved pattern 210 may include the multiple engraved pattern elements 211 and 212 that are aligned parallel to a vertical direction while the second engraved pattern 230 may include the multiple engraved pattern elements 231 and 232 that are aligned parallel to a horizontal direction. An individual engraved pattern element of the first engraved pattern 210 may intersect with all the engraved pattern elements of the second engraved pattern 230. For example, the first engraved pattern 210 and the second engraved pattern 230 may be perpendicular to each other, e.g., the first and second engraved patterns 210 and 230 may be parallel to respective vertical and horizontal edges of the spacer 200.

Referring to FIG. 3B, the first engraved pattern 210 may include multiple engraved pattern elements 213 and 214 aligned parallel to a first direction, while the second engraved pattern 230 may include multiple engraved pattern elements 233 and 234 aligned parallel to a second direction that intersects with the first direction. An individual engraved pattern element of the first engraved pattern 210 may intersect with at least one engraved pattern element of the second engraved pattern 230. For example, the first engraved pattern 210 and the second engraved pattern 230 may be perpendicular to each other, e.g., the first and second engraved patterns 210 and 230 may be inclined or diagonal relative to the vertical and horizontal edges of the spacer 200.

In an embodiment, the engraved pattern 200P of the spacer 200 may be formed as a well structure in cross-sectional view, e.g., each linear and continuous pattern may have a trench structure in a cross-sectional view. The cross-sectional shape of the well structure may have various forms, such as a triangular shape, a rectangular shape, a segmental circular shape, a polygonal shape, or the like. Further, the size of the cross-sectional shape of the well structure may be determined based on design requirements, as will be described with reference to FIGS. 4A-4C.

In the illustrated examples of FIGS. 4A to 4C, the cross-sectional shapes of the well structure may correspond to a triangular shape, a segmental circular shape, and a rectangular shape, respectively. However, the shapes shown in FIG. 4A to 4C are merely examples and any suitable cross-sectional shapes may also be selected. The first engraved pattern elements 211 and the second engraved pattern elements 212 of the first engraved pattern 210 may have different cross-sectional shapes or the same cross-sectional shape as each other. Furthermore, the well structures may be spaced apart at predetermined intervals, e.g., the well structures may be spaced apart from each other by a flat portion that contacts the electrode assembly 100. The cross-sectional shape, size, and spacing of the well structures may be selected in consideration of factors such as energy density, the contact area between the electrode assembly 100 and the spacer 200 (e.g., via the flat portions between the well structures), the prevention of deformation of the electrode assembly 100, the distribution of pressure applied from the case 300, and/or diffusion of the electrolyte flowing along the engraved pattern 200P.

The engraved pattern 200P of the spacer 200 may serve as a pathway for the electrolyte during impregnation into the case 300. As a result, the diffusion of the electrolyte may be accelerated, thereby reducing or minimizing the impregnation time. Additionally, as the engraved pattern 200P utilizes an internal volume of the secondary battery 10, the electrolyte level within the secondary battery 10 may be maintained at a higher level.

In an embodiment, the spacer 200 may include an insulating material. Accordingly, the spacer 200 may electrically insulate the electrode assembly 100 from the case 300. For example, the insulating material may include at least one of polypropylene (PP) or polyethylene (PE). However, the spacer 200 may include other insulating materials, e.g., a conductive metal, such as stainless use steel (SUS).

In an embodiment, the material of the spacer 200 may have a greater rigidity than the material of the electrode assembly 100. In some embodiments, the material of the spacer 200 may have a higher Young's Modulus than the material of the electrode assembly 100. Referring to FIG. 5, in a case where a pressure P1 is applied to both side surfaces (e.g., opposite sides) of the case 300 in contact with the spacer 200 from the outside, the deformation of the spacer 200 may be less than the deformation of the electrode assembly 100. Furthermore, compared to a case where the spacer 200 is not present, the spacer 200 may distribute the pressure applied to the surfaces of the electrode assembly 100 in contact with the spacer 200, resulting in a more uniform pressure P2 being applied to the electrode assembly 100. Under such a structure, when the spacer 200 is inserted into the case 300, bending or twisting of the spacer may be minimized. Additionally, gas may be more effectively discharged from the inside of the case 300, and degassing may be facilitated.

In an embodiment, the secondary battery 10 may include the case 300 having the top opening TO and accommodating the electrode assembly 100 and the spacer 200. The case 300 may be in contact with the spacer 200. For example, the electrode assembly 100 may be covered by the spacer 200 (e.g., the spacer 200 may cover an entirety of two opposite sidewalls of the electrode assembly 100), such that the case 300 does not contact the electrode assembly 100. In another example, the case 300 may be in partial contact with the electrode assembly 100. A separate adhesive layer may not be disposed between the spacer 200 and the case 300. While the pressure is applied to the first spacer 201 and the second spacer 202 in a direction oriented toward the electrode assembly 100, the electrode assembly 100 and the spacer 200 may be accommodated within the case 300. As the case 300 prevents the spacer 200 accommodated therein from dislodging to the outside, the spacer 200 may remain in contact with the case 300.

The case 300 may have a well structure and may accommodate the electrode assembly 100 and the spacer 200 within the well structure (e.g., the case 300 may have an empty interior space to accommodate the electrode assembly 100 and the spacer 200 therein). The case 300 may enclose a bottom surface of the electrode assembly 100, an outer surface and a bottom surface of the spacer 200.

In an embodiment, the case 300 may have a rectangular parallelepiped shape without a top surface. The portion without the top surface may correspond to the top opening TO. In this case, the rectangular parallelepiped shape of the case 300 may have a uniform thickness. For example, the case 300 may be used in a battery in a prismatic shape. In another example, the case 300 may have various shapes that are suitable for use in a pouch type battery, a cylindrical batter, or the like.

The case 300 may include a conductive metal such as aluminum, an aluminum alloy, or a nickel-plated steel. For example, the case 300 may include SUS.

In an embodiment, the secondary battery 10 may include the cap assembly 400. The cap assembly 400 may be disposed at the top opening TO of the case 300. The cap assembly 400 may be coupled to the case 300 to seal the electrode assembly 100.

In an embodiment, the cap assembly 400 may include the cap plate, the terminal plate, and the vent hole. Details regarding these components are previously described with reference to FIGS. 1A and 1B, and will therefore be omitted here.

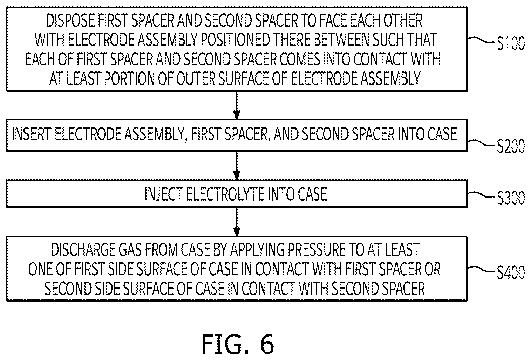

FIG. 6 illustrates a flowchart of a method for manufacturing a secondary battery according to an embodiment.

Referring to FIG. 6, the method for manufacturing the secondary battery may include disposing the first spacer and the second spacer to face each other with the electrode assembly positioned therebetween such that each of the first spacer and the second spacer comes into contact with at least a portion of the outer surface of the electrode assembly and covers at least one of lower edges of the electrode assembly (S 100), and inserting the electrode assembly, the first spacer, and the second spacer into the case (S200). Additionally, the method may further include injecting electrolyte into the case (S300). At least some of the electrolyte may diffuse (e.g., spread) inside the case through the engraved pattern. Further, the method may include discharging gas from the case by applying pressure to at least one of a first side surface of the case in contact with the first spacer or a second side surface of the case in contact with the second spacer (S400). Here, the electrolyte injection step (S300) may be performed prior to the gas discharge step (S400). Since at least a portion of the outer surface of the electrode assembly is in contact with the spacer and both the electrode assembly and spacer are inserted together into the case, the impact caused by the electrode assembly colliding with the case during insertion can be reduced or minimized. This helps to minimize or reduce issues such as bending of the electrode assembly or misalignment of the first electrode, the second electrode, or the separator included in the electrode assembly. Furthermore, the pressure externally applied to the first side surface and the second side surface of the case can be distributed across the entire region of the first spacer and the second spacer. In this case, the secondary battery can apply uniform pressure to the electrode assembly, as compared to a case without spacers. Thus, degassing from the case can be facilitated.

**In** an embodiment, the method for manufacturing the secondary battery includes disposing the first spacer and the second spacer to face each other with the electrode assembly positioned therebetween such that each of the first spacer and the second spacer comes into contact with at least a portion of the outer surface of the electrode assembly and covers at least one of lower edges of the electrode assembly (S 100). The electrode assembly may include the first electrode, the second electrode, and the separator disposed between the first electrode and the second electrode. The first spacer and the second spacer may each be disposed on at least a portion of the outer surface of the electrode assembly. Each of the first spacer and the second spacer may be arranged to be spaced apart from the center of the electrode assembly.

For example, the first spacer and the second spacer may be positioned symmetrically at equal or similar distances from the center axis of the electrode assembly, in opposite directions. **In** this case, the first spacer and the second spacer may be rotationally symmetric about the center axis of the electrode assembly. The center axis of the electrode assembly may be substantially parallel to the height direction of the electrode assembly. **In** another example, a first region included in the first spacer may be rotationally symmetrical with a second region included in the second spacer. **In** this case, when forces of equal magnitude are applied to the first region and the second region in directions towards their respective rotational symmetry points, the sum of the two forces and the sum of the torques generated by these forces will each be zero. In some embodiments, the first spacer and the second spacer may be arranged in a plane symmetry with respect to a plane passing through the electrode assembly. In this case, the plane passing through the electrode assembly may be a plane perpendicular to the X-direction. For example, a first region included in the first spacer and a third region included in the second spacer may be plane-symmetric with respect to the plane passing through the electrode assembly. In this case, when forces of equal magnitude are applied to the first region and the third region in directions towards their respective planes, the sum of the two forces and the sum of the torques generated by these forces will each be zero. For example, opposite ends of the first spacer may be arranged to be spaced apart from opposite ends the second spacer, respectively, or the opposite ends of the first spacer may be arranged to partially contact with the opposite ends of the second spacer, respectively. However, the first spacer and the second spacer may be arranged in various ways depending on the shape of the electrode assembly or the shape of the case.

In an embodiment, at least one of the lower edges of the electrode assembly may be covered by the first spacer and the second spacer. In this case, a first lower edge of the electrode assembly covered by the first spacer may be different from a second lower edge of the electrode assembly covered by the second spacer. The first spacer may cover a portion of the first lower edge of the electrode assembly, or may cover the entire lower edge of the electrode assembly. **In** this case, the first spacer may be disposed to extend downward beyond the first lower edge of the electrode assembly by a predetermined length, or may be disposed to extend downward without exceeding the first lower edge of the electrode assembly. **In** one example, the height of the first spacer may be greater than the height of the electrode assembly. Here, the height direction of the electrode assembly may refer to a direction from the bottom of the case toward the cap plate. **In** another example, the height of the first spacer may be substantially the same as the height of the electrode assembly. The height of the first spacer may be substantially the same as the height of the second spacer. However, the height of the spacer may be less than the height of the electrode assembly such that the spacer is spaced apart from the cap assembly.

In an embodiment, in the case of a prismatic secondary battery, the first spacer may be arranged to contact a first outer surface having a larger area among the outer surfaces of the electrode assembly. The second spacer may be arranged to contact a second outer surface that faces the first outer surface and has an area substantially the same or similar to that of the first outer surface, among the outer surfaces of the electrode assembly. In this case, the first spacer ay contact a lower side of the first outer surface of the electrode assembly and may cover the lower side of the first outer surface. Here, the lower side of the first outer surface may be one of the lower edges of the electrode assembly. Furthermore, the second spacer may contact a lower side of the second outer surface of the electrode assembly and may cover the lower side of the second outer surface. Here, the lower side of the second outer surface may be one of the lower edges of the electrode assembly. This structure may correspond to an electrode assembly in a stacked configuration or a jelly-roll configuration. In this example, the first spacer and the second spacer are respectively arranged to contact the first outer surface and the second outer surface each having a larger area. However, a third outer surface and a fourth outer surface each having a smaller area and facing each other may be respectively arranged to contact the first spacer and the second spacer. In this cases, the third and fourth outer surfaces in the stacked-type electrode assembly may be flat surfaces, but the third and fourth outer surfaces in the jelly-roll type electrode assembly may be curved surfaces. However, in various types of electrode assemblies, such as a cylindrical electrode assembly, the first and second spacers may be arranged to contact a curved surface, and may cover at least a portion of the lower edge of the curved surface.

In an embodiment, the spacer may include an insulating material. Accordingly, the spacer may electrically insulate the electrode assembly from the case. For example, the insulating material may include at least one of polypropylene (PP) or polyethylene (PE). However, the spacer may include other insulating materials. In some embodiments, the spacer may include a conductive metal, such as stainless steel (SUS).

In an embodiment, the material of the spacer may have a greater rigidity than the material of the electrode assembly. In some embodiments, the material of the spacer may have a higher Young's Modulus than the material of the electrode assembly. In a case where equal pressure is externally applied to the opposing two side surfaces of the case, respectively contacting the first side surface of the first spacer and the second side surface of the second spacer, the deformation of the first and second spacers may be less than that of the electrode assembly. Furthermore, compared to a case where the spacer is not present, the spacer may distribute the pressure applied to the surfaces of the electrode assembly in contact with the spacer, resulting in a more uniform pressure being applied to the electrode assembly. Under such a structure, when the spacer is inserted into the case, bending or twisting of the spacer may be minimized. Additionally, gas may be more effectively discharged from the inside of the case, and degassing may be facilitated.

In an embodiment, the method for manufacturing the secondary battery may include inserting the electrode assembly, the first spacer, and the second spacer into the case (S200). As at least one of the lower edges of the electrode assembly is covered by each of the first and second spacers, the bending of the electrode assembly or the twisting of the aligned electrodes within the electrode assembly, which may occur when the electrode assembly is inserted into the case, may be reduced. Additionally, the first and second spacers have a greater rigidity than the electrode assembly. Therefore, the occurrence of bending or twisting of the spacers during insertion into the case can be minimized.

In an embodiment, the method for manufacturing the secondary battery may include injecting the electrolyte into the case (S300), after inserting the electrode assembly, the first spacer, and the second spacer into the case (S200). **In** this case, at least some of the electrolyte may diffuse inside the case through the engraved pattern.

**In** an embodiment, each of the first spacer and the second spacer may include an engraved pattern on the surface that contacts the electrode assembly. The engraved pattern may include multiple repetitive engraved pattern elements. The engraved pattern elements may be parallel to one another or intersect with each other. The engraved pattern may include a first engraved pattern and a second engraved pattern. The first engraved pattern may be aligned parallel to a first direction, and the second engraved pattern may be aligned parallel to a second direction that intersects with the first direction. For example, the first engraved pattern may include multiple engraved pattern elements, and the second engraved pattern may include multiple engraved pattern elements. The first engraved pattern and the second engraved pattern may intersect at least at one point. For instance, the first engraved pattern and the second engraved pattern may intersect with each other. One of the engraved pattern elements of the first engraved pattern may intersect with at least one of the engraved pattern elements of the second engraved pattern.

In an embodiment, the first engraved pattern may include the multiple engraved pattern elements that are aligned parallel to a vertical direction while the second engraved pattern may include the multiple engraved pattern elements that are aligned parallel to a horizontal direction. An individual engraved pattern element of the first engraved pattern may intersect with all the engraved pattern elements of the second engraved pattern. For example, the first engraved pattern and the second engraved pattern may be perpendicular to each other. **In** another embodiment, the first engraved pattern may include multiple engraved pattern elements aligned parallel to a first direction, while the second engraved pattern may include multiple engraved pattern elements aligned parallel to a second direction that intersects with the first direction. For example, an individual engraved pattern element of the first engraved pattern may intersect with at least one engraved pattern element of the second engraved pattern.

**In** an embodiment, the engraved pattern of the spacer may be formed as a well structure in cross-sectional view. The cross-sectional shape of the well structure may have various forms, such as a triangular shape, a rectangular shape, a segmental circular shape, a polygonal shape, or the like. Further, the size of the cross-sectional shape of the well structure may be determined based on design requirements. For example, the cross-sectional shape of the well structure may be selected from one of a triangular shape, a segmental circular shape, and a rectangular shape. The respective engraved pattern elements of the engraved pattern may have different cross-sectional shapes or the same cross-sectional shape as each other. Furthermore, the well structures may be spaced apart at predetermined intervals. The cross-sectional shape, size, and spacing of the well structures may be selected in consideration of factors such as energy density, the contact area between the electrode assembly and the first spacer, the prevention of deformation of the electrode assembly, the distribution of pressure applied from the case, or diffusion of the electrolyte flowing along the engraved pattern. The description of the engraved pattern of the first spacer can be similarly applied to the engraved pattern of the second spacer.

After the electrolyte is injected into the case, the engraved pattern of the spacer may serve as a pathway through which the electrolyte passes. The engraved pattern of the spacer may serve as the pathway for the electrolyte during impregnation into the case. As a result, the diffusion of the electrolyte may be accelerated, thereby reducing the impregnation time. Additionally, as the engraved pattern utilizes an internal volume of the secondary battery, the electrolyte level within the secondary battery may be maintained at a higher level.

**In** an embodiment, the method for manufacturing the secondary battery may include, discharging gas from the case by applying pressure to at least one of a first side surface of the case in contact with the first spacer or a second side surface of the case in contact with the second spacer (S400), after inserting the electrode assembly, the first spacer, and the second spacer into the case (S200). For example, both the first side surface and the second side surface may be pressed simultaneously. As described earlier, the material of each of the first and second spacers may have a greater rigidity or a higher Young's modulus compared to the material of the case. Accordingly, the pressure externally applied to the electrode assembly may be more uniformly distributed than in cases without spacers. Consequently, the gas inside the case can be discharged effectively to the outside of the case.

In an embodiment, the gas discharge step (S400) may additionally include using the heat vacuum charging (HVC) method to discharge gas. The HVC method involves treating the secondary battery at a high temperature under vacuum conditions, which can effectively remove internal gases from the battery while also enhancing electrolyte penetration. By combining pressing and the HVC method, gas inside the case can be discharged more effectively.

By way of summation and review, the overall process of producing cells for a secondary battery may include a process of inserting an electrode assembly into a case. During the insertion process, the electrode assembly may be bent, or aligned electrode plates within the electrode assembly may be twisted (e.g., distorted). The bending of the electrode assembly may cause detachment of the electrode plates. The twisting of the aligned electrode plates within the electrode assembly may lead to decreased efficiency of the secondary battery and may even cause an internal short circuit. Additionally, the overall process of producing cells for the secondary battery may include a formation process, which may involve applying pressure to the case from the outside to discharge internal gases. As the electrode plates in the electrode assembly become larger in area, gas may not be sufficiently discharged.

In contrast, according to some embodiments, a secondary battery may be provided with a spacer that contacts an outer surface of an electrode assembly, resulting in a secondary battery in which defects caused by bending of the electrode assembly or twisting of aligned electrode plates within the electrode assembly are reduced or minimized.

According to some embodiments, there may be provided a secondary battery in which pressure applied externally to a case of the secondary battery is distributed across one surface of a spacer that contacts an electrode assembly, thereby facilitating degassing and reducing or minimizing issues caused by degassing failure.

According to some embodiments, there may be provided a method for manufacturing a secondary battery, which involves inserting a spacer that contacts an outer surface of an electrode assembly into a case, thereby reducing or minimizing bending of the electrode assembly or twisting of a stack of electrode plates within the electrode assembly.

According to some embodiments, there may be provided a method for manufacturing a secondary battery, in which pressure applied externally to a case is distributed over one surface of a spacer that contacts an electrode assembly, thereby facilitates degassing. Therefore, the yield in secondary battery manufacturing can be improved.

However, aspects and features of the present disclosure are not limited to those described above, and other aspects and features not mentioned will be clearly understood by a person skilled in the art from the detailed description, described above.

Although the present disclosure has been described with reference to embodiments and drawings illustrating aspects thereof, the present disclosure is not limited thereto. Various modifications and variations can be made by a person skilled in the art to which the present disclosure belongs within the scope of the claims, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery 10, comprising:
an electrode assembly 100 including a first electrode 110, a second electrode 130, and a separator 150 between the first electrode 110 and the second electrode 130;
a spacer 200 in contact with at least a portion of an outer surface of the electrode assembly 100;
a case 300 including a top opening TO and accommodating the electrode assembly 100 and the spacer 200; and
a cap assembly 400 at the top opening TO to seal the electrode assembly 100.

2. The secondary battery 10 as claimed in claim 1, wherein:
the spacer 200 includes a first spacer 201 and a second spacer 202, each of the first spacer 201 and the second spacer 202 covering at least one of lower edges of the electrode assembly 100, and
the first spacer 201 and the second spacer 202 face each other with the electrode assembly 100 positioned therebetween.

3. The secondary battery 10 as claimed in claim 1 or claim 2, wherein a thickness of the spacer 200 is in a range of 0.5 mm to 3 mm.

4. The secondary battery 10 as claimed in any preceding claim, wherein a height of the spacer 200 is equal to or greater than a height of the electrode assembly 100.

5. The secondary battery 10 as claimed in any preceding claim, wherein a surface of the spacer 200 in contact with the electrode assembly 100 is at least one of a flat surface or a curved surface.

6. The secondary battery 10 as claimed in any preceding claim, wherein the spacer 200 includes an engraved pattern 200P on a surface in contact with the electrode assembly 100.

7. The secondary battery 10 as claimed in claim 6, wherein the engraved pattern 200P includes:
a first engraved pattern 210 aligned parallel to a first direction, and
a second engraved pattern 230 aligned parallel to a second direction that intersects with the first direction, the first engraved pattern 210 and the second engraved pattern 230 intersecting at least at one point.

8. The secondary battery 10 as claimed in claim 7, wherein a cross-sectional shape of the first engraved pattern 210 is a triangular shape, a rectangular shape, or a segmental circular shape.

9. The secondary battery 10 as claimed in any preceding claim, wherein the spacer 200 is spaced apart from the cap assembly 400.

10. The secondary battery 10 as claimed in any preceding claim, wherein the spacer 200 includes an insulating material or stainless steel.

11. The secondary battery 10 as claimed in claim 10, wherein the insulating material includes at least one of polypropylene or polyethylene.

12. The secondary battery 10 as claimed in any preceding claim, wherein a material contained in the spacer 200 has a higher Young's modulus than a material contained in the case 300.

13. A method for manufacturing a secondary battery, the method comprising:
disposing a first spacer 201 and a second spacer 202 to face each other with an electrode assembly 100 positioned therebetween, such that each of the first spacer 201 and the second spacer 202 comes into contact with at least a portion of an outer surface of the electrode assembly 100 and covers at least one of lower edges of the electrode assembly 100; and
inserting the electrode assembly 100, the first spacer 201, and the second spacer 202 into a case 300.

14. The method as claimed in claim 13, further comprising injecting an electrolyte into the case 300, after inserting the electrode assembly 100, the first spacer 201, and the second spacer 202 into the case 300, such that at least some of the electrolyte diffuses within the case 300 through an engraved pattern of the first spacer 201;
and, optionally,
wherein the engraved pattern is on a surface in contact with the electrode assembly;
and, further optionally,
wherein the engraved pattern includes multiple first engraved patterns aligned parallel to a first direction, and multiple second engraved patterns aligned parallel to a second direction that intersects with the first direction,
and, yet further optionally,
wherein the multiple first engraved patterns and the multiple second engraved patterns intersect at least at one point.

15. The method as claimed in claim 13 or claim 14,
(A) further comprising, after inserting the electrode assembly 100, the first spacer 201, and the second spacer 202 into the case 300, discharging gas from the case 300 by applying pressure to at least one of a first side surface of the case 300 in contact with the first spacer 201 or a second side surface of the case 300 in contact with the second spacer 202;
and, optionally,
wherein the discharging of the gas from the case further includes utilizing a heat vacuum charging (HVC) method to discharge the gas;
and/or
(B) wherein the first spacer may include at least one of stainless steel (SUS), polypropylene (PP) or polyethylene (PE);
and/or
(C) wherein a material contained in the first spacer may have a higher Young's modulus than a material contained in the case.
